# EUROPÄISCHE PATENTANMELDUNG

(11) **EP 4 238 760 A1**
(43) Veröffentlichungstag der Anmeldung: **06.09.2023**
(21) Anmeldenummer: 22159654.7
(22) Anmeldetag: 02.03.2022
(51) Int. Cl.: B32B 27/08, B32B 27/32, B32B 27/34, B32B 1/08, B32B 27/30, B32B 27/40, B32B 27/20

(54) **MEHRSCHICHTIGES ROHR AUS NACHHALTIGER HERSTELLUNG**

(71) Anmelder: TI Automotive (Fuldabrück) GmbH, 34277 Fuldabrück (DE)
(72) Erfinder: Häckel, Andre, 34513 Waldeck (DE); Fahrenholz, Frank, 34128 Kassel (DE); Schramowski, Martin, 34134 Kassel (DE); Arnold, Siegfried, 34128 Kassel (DE)
(74) Vertreter: Andrejewski - Honke Patent- und Rechtsanwälte Partnerschaft mbB

(57) **Zusammenfassung**

Ein erstes Kunststoff-Rezyklat wird für ein Rohr(1) eines Landfahrzeugs, insbesondere eines Straßenfahrzeugs, verwendet. Das Rohr(1) umfasst eine erste Schicht (2) und eine zweite Schicht (3), wobei die erste Schicht (2) und die zweite Schicht (3) aneinander anliegen. Die erste Schicht (2) weist das erste Kunststoff-Rezyklat auf, wobei die zweite Schicht (3) einen ersten jungfräulichen Kunststoff umfasst. Das erste Kunststoff-Rezyklat und der erste jungfräuliche Kunststoff gehören derselben Kunststoffart - beispielsweise der Kunststoffart der Polyamide oder der Kunststoffart der Polyolefine - an.

## Beschreibung

Die Erfindung betrifft die Verwendung eines Rohrs aus einer nachhaltigeren Herstellung für ein Landfahrzeug, insbesondere für ein Straßenfahrzeug, wobei das Rohr eine erste Schicht und eine zweite Schicht aufweist, wobei die erste Schicht und die zweite Schicht aneinander anliegen.

Kraftstoffbehälter, bei denen ein Kunststoff-Rezyklat verwendet wird, sind bereits aus DE 10 2016 226 064 A1 bekannt. Demzufolge umfasst die Wand des Kraftstoffbehälters mehrere Schichten unterschiedlicher, thermoplastischer Kunststoffe wie High Density Polyethylen (HDPE), Low Density Polyethylen (LDPE) und Ethylen-Vinylalkohol-Copolymer (EVOH). Eine beispielhafte Schichtenfolge der Behälterwand von innen nach außen ist HDPE / LDPE / EVOH / LDPE / Rezyklat / HDPE. Bei der Anwendung des Extrusionsblasformens zur Herstellung des mehrschichtigen Kraftstoffbehälters fallen Kunststoffabfälle an, die in ihrer Gesamtheit nachfolgend als Butzen bezeichnet werden. Der Butzen ist somit eine entsprechend anteilige Mischung aus den Kunststoffen HDPE, LDPE und EVOH. Hierbei machen HDPE ca. zwei Drittel und LDPE ca. ein Drittel des Gewichtsanteils aus, während EVOH aufgrund der geringen Schichtdicke in der Behälterwand einen Gewichtsanteil im einstelligen Prozentbereich oder darunter ausmacht.

Der Butzen wird gemäß DE 10 2016 226 064 A1 zu einem Granulat vermahlen und als Kunststoff-Rezyklat wieder in den Prozess eingespeist, indem das Kunststoff-Rezyklat als separate Schicht in der Behälterwand angeordnet wird. Die Rezyklatschicht macht mehr als die Hälfte des Gewichtsanteils des Kraftstoffbehälters aus, was herstellungsbedingt durch die verhältnismäßig große Menge an Kunststoffabfällen bei dem Extrusionsblasformen bedingt ist. Durch die Verwendung von Rezyklat wird der Herstellungsprozess deutlich nachhaltiger.

Nachteilig an den bekannten Kraftstoffbehältern mit Rezyklat ist, dass sich die dortigen Verhältnisse der Schichten nicht auf Rohre übertragen lassen. Insbesondere sind die Wände von Rohren in der Regel deutlich dünner als diejenigen von Behältern, weil die Rohre aufgrund der Platzverhältnisse in Kraftfahrzeugen an vielen Stellen stärker gebogen werden müssen. Dies hat zur Folge, dass die Schichten von Rohren sehr viel genauer aufeinander abgestimmt werden müssen, weil jede Schicht mit einer möglichst geringen Wandstärke einen möglichst großen Effekt erzielen muss. Ein anderer Grund der mangelnden Übertragbarkeit der Verhältnisse ist, dass die Behälter ganz anders als die Rohre hergestellt werden. So werden die Rohre kontinuierlich extrudiert anstatt - wie bei den Behältern mittels Extrusionsblasformen - stückweise.

Aus WO 2017/220657 A1 sind Rohre bekannt, welche eine innere, jungfräuliche HDPE-Schicht, eine äußere, jungfräuliche HDPE-Schicht sowie eine mittlere Schicht aus einem HDPE-Rezyklat umfassen. Das HDPE-Rezyklat entstammt in diesem Fall nicht den Industrie-, sondern den häufig wesentlich unreineren Verbraucherabfällen. Die Rohre weisen eine Wandstärke von 5 mm und einen Durchmesser von 110 mm auf und sind daher um ein Vielfaches größer als diejenigen von Landfahrzeugen. Die aus WO 2017/220657 A1 bekannten Rohre mögen beispielsweise für die Führung von Abwässern geeignet sein und sind somit recht geringen Anforderungen ausgesetzt.

Rohre von Landfahrzeugen aber sind in mehrerlei Hinsicht wesentlich strengeren Rahmenbedingungen als etwa Abwasserrohre unterworfen. So müssen Rohre von Landfahrzeugen sehr kompakt gestaltet und durch den engen Raum eines Landfahrzeugs mit Hilfe von zahlreichen Biegungen hindurch geführt werden. Gleichzeitig müssen viele Rohre von Landfahrzeugen sehr hohen Drücken und/oder Temperaturen sowie widrigen Umwelteinflüssen standhalten. Schließlich müssen viele der Rohre von Landfahrzeugen mit Hilfe von speziell auf die entsprechenden, oft aggressiven Fluide abgestimmten Barriereschichten eine sehr niedrige Permeabilität bereitstellen.

All diese technischen Anforderungen sowie der bekannte Kostendruck der Automobilzuliefererbranche führen zu ausgesprochen stark ausdifferenzierten und bis ins Detail durchdachten Rohrkonstrukten, was sich nicht selten in der hohen Zahl von fünf, sechs oder sogar sieben Schichten einer Rohrwand ausdrückt. Das aus WO 2017/220657 A1 bekannte Rohr ist für einen Einsatz in Landfahrzeugen nicht verwendbar, weil es nicht nur hinsichtlich der Dimensionen, sondern insbesondere auch hinsichtlich des verwendeten Materials (ausschließlich der Standardkunststoff HDPE) ungeeignet ist. Um den vorgenannten Anforderungen gerecht werden zu können, müssen wenigstens einige der Rohrschichten einen technischen Kunststoff oder einen Hochleistungskunststoff aufweisen.

Der Erfindung liegt daher die Aufgabe zugrunde, ein Rohr für die Verwendung in Landfahrzeugen zu schaffen, wobei das Rohr aus einem nachhaltigeren Herstellungsprozess stammt und gleichzeitig die zahlreichen technischen Anforderungen erfüllen kann.

Die vorgenannte Aufgabe wird gelöst durch die Verwendung eines ersten Kunststoff-Rezyklats für ein Rohr eines Landfahrzeugs, insbesondere eines Straßenfahrzeugs, wobei das Rohr eine erste Schicht und eine zweite Schicht umfasst, wobei die erste Schicht und die zweite Schicht aneinander anliegen, wobei die erste Schicht das erste Kunststoff-Rezyklat aufweist, wobei die zweite Schicht einen ersten jungfräulichen Kunststoff umfasst, wobei das erste Kunststoff-Rezyklat und der erste jungfräuliche Kunststoff derselben Kunststoffart - beispielsweise der Kunststoffart der Polyamide oder der Kunststoffart der Polyolefine - angehören.

Der Erfindung liegt die Erkenntnis zugrunde, dass das erste Kunststoff-Rezyklat trotz der Verunreinigungen bzw. der Wiederverwendung ein recht ähnliches Adhäsionsverhalten wie der erste jungfräuliche Kunststoff derselben Kunststoffart zeigt. Daher kann die grundlegende Schichtabfolge eines Rohres ohne Rezyklat lediglich um die Rezyklatschicht ergänzt werden, so dass Anpassungen weniger oft erforderlich sind. Hierzu wird die teilweise zu ersetzende, jungfräuliche Schicht dünner gestaltet und um die Rezyklatschicht ergänzt. Die Rezyklatschicht bzw. die erste Schicht mit dem Kunststoff-Rezyklat wird sehr gut an dem ersten jungfräulichen Kunststoff der zweiten Schicht haften und - im Falle einer dritten Schicht auf der gegenüberliegenden Seite - gegebenenfalls auch entsprechend gut an der dritten Schicht.

Es wurde ferner gefunden, dass - im Vergleich zu einem entsprechenden jungfräulichen Kunststoff - das Rezyklat häufig die Spezifikationen hinsichtlich mechanischer und/oder Barriereeigenschaften nicht bzw. nur teilweise erfüllt, so dass es den jungfräulichen Kunststoff nicht vollständig verdrängen kann. Daher liegt der Erfindung insbesondere die Erkenntnis zugrunde, dass der erste jungfräuliche Kunststoff weiterhin notwendig ist, um die jeweils beabsichtigte Funktion dieser Schicht in vollem Umfang erfüllen zu können und um die Wandstärke nicht über Gebühr zu erhöhen. Dennoch wird ein guter Teil an jungfräulichem Kunststoff eingespart, so dass das erfindungsgemäße Rohr aus einer nachhaltigeren Herstellung entstammt und gleichzeitig keinerlei Qualitätseinbußen hinnehmen muss. Im Ergebnis ist damit die erfindungsgemäße Aufgabe gelöst.

Der Begriff "Rezyklat" meint vorzugsweise Kunststoffe, welche bereits ein Herstellungsverfahren durchlaufen haben, bei dem das Kunststoffmaterial eine für den (End) - Verbraucher vorgesehene Form angenommen hat. Hierbei kann es sich beispielsweise um extrudierte oder spritzgegossene Produkte oder Halbzeuge handeln oder aber um solches Material, welches während des Herstellungsprozesses Ausschuss darstellt. Beim eingangs genannten Stand der Technik DE 10 2016 226 064 A1 ist die Herstellung so ausgestaltet, dass aus dem jungfräulichen Kunststoffmaterial sowohl Produkte hergestellt werden als auch Kunststoffabfälle anfallen. Während erstere dem Markt bzw. dem Verbraucher zugeführt werden und einen Verbrauchszyklus durchlaufen gilt dies für letztere nicht. Die Kunststoffabfälle können praktisch direkt nach dem Einsammeln diesem Herstellungsprozess oder einem anderen Herstellungsprozess zugeführt werden. In aller Regel sind daher die Kunststoffabfälle aus dem Herstellungsprozess deutlich reiner als diejenigen Kunststoffmaterialien, welche einen vollständigen Verbraucherzyklus durchlaufen haben. Vorzugsweise meint der Begriff "Rezyklat" lediglich Kunststoffabfälle aus industrieller Herstellung bzw. industrielles Rezyklat (post-industrielles Rezyklat). Der Begriff "Rezyklat" kann allerdings auch Rezyklat aus Endverbraucherhand umfassen (post-consumer-Rezyklat), welches beispielsweise aus arten- bzw. sortenreinen Materialien des Wiederverwertungssystems "Gelber Sack" gewonnen wird.

Die Kunststoffe mögen bezüglich physikalischer Gesichtspunkte in die Kunststoffgruppen der Thermoplasten, der Duroplasten und der Elastomere eingeteilt werden. Darüber hinaus können weitere Kunststoffgruppen definiert werden, welche Eigenschaften beider Gruppen in sich vereinen. Zu nennen ist beispielsweise die Kunststoffgruppe der thermoplastischen Elastomere. Die Kunststoffgruppen lassen sich wiederum in Untergruppen mit amorphen bzw. (wenigstens) teilkristallinen Kunststoffarten einteilen. Die Kunststoffgruppen der Thermoplasten umfasst unter anderem die Kunststoffart der Polyamide (PA), die der Polyolefine (PO) oder die der Polymere mit Vinylalkohol (VA). Die Kunststoffart der Polyamide umfasst die Kunststoffsorten der aliphatischen Polyamide, der aromatischen Polyamide (Aramide) sowie die der teilaromatischen Polyamide. Die Kunststoffart der Polyolefine umfasst beispielsweise die Kunststoffsorten Polypropylen (PP) und Polyethylen (PE). Die Kunststoffart der Polymere mit Vinylalkohol umfasst beispielsweise die Kunststoffsorte der Polyvinylalkohole (PVOH) und die Kunststoffsorte der Ethylen-Vinylalkohol-Copolymere (EVOH).

Die Kunststoffsorte der aliphatischen Polyamide umfasst beispielsweise die Kunststofftypen PA6 oder PA11. Die Kunststoffsorte der teilaromatischen Polyamide (Polyphthalamide) umfasst beispielsweise den Kunststofftyp PA9T. Die Kunststoffsorte Polypropylen umfasst beispielsweise den Kunststofftyp isotaktisches Polypropylen. Der Kunststoffsorte Polyethylen gehört beispielsweise der Kunststofftyp HDPE an. Der Kunststoffsorte PVOH gehören verschiedene Kunststofftypen an, die sich jeweils durch einen unterschiedlichen Hydrolysierungsgrad unterscheiden. Die Kunststoffsorte EVOH umfasst verschiedene Kunststofftypen in Abhängigkeit des Ethylen-Anteils in Mol-%.

Die Kunststoffgruppe der thermoplastischen Elastomere umfasst unter anderem die Kunststoffart der thermoplastischen Vulkanisate (TPV). Eine Kunststoffsorte der thermoplastischen Vulkanisate ist die EPDM/PP-Matrix, besser bekannt unter dem Markennamen Santoprene. Die Kunststoffsorte der EPDM/PP-Matrix umfasst eine Vielzahl an Kunststofftypen, wobei jeder dieser Kunststofftypen durch eine spezifische Zusammensetzung der Gewichtsanteile von EPDM und PP charakterisiert ist. Die Kunststoffgruppe der Elastomere umfasst unter anderem die Kunststoffart der Ethylen-Propylen-Copolymere (E/P). Die Kunststoffart der E/P-Kautschuke weist beispielsweise die Kunststoffsorte Ethylen-Propylen-Dien-Kautschuk (EPDM) auf. Die Kunststoffsorte EPDM umfasst eine Reihe an Kunststofftypen, welche durch jeweils spezifische Gewichtsanteile von Ethylen und Dien gekennzeichnet sind.

An den vorgenannten Beispielen wird die Klassifikation der Begrifflichkeiten "Kunststofftypen", "Kunststoffsorten" und "Kunststoffarten" deutlich. Kunststofftypen sind Kunststoffe mit klar definierten Eigenschaften, wohingegen die Kunststoffsorte den nächstliegenden Oberbegriff der Kunststofftypen darstellt. Die Kunststoffart ist wiederum der jeweilige, nächstliegende Oberbegriff der Kunststoffsorten.

Die Kunststoffart des ersten Kunststoff-Rezyklats und des ersten jungfräulichen Kunststoffs ist vorzugsweise ausgewählt aus einer Menge von Kunststoffarten umfassend Polyamide, Polyolefine, Polyurethane, Polymere mit Vinylalkohol, Fluorpolymere, thermoplastische Vulkanisate, thermoplastische Elastomere auf Urethanbasis, thermoplastische Elastomere auf Olefinbasis.

Gemäß einer ganz besonders bevorzugten Ausführungsform gehören das erste Kunststoff-Rezyklat und der erste jungfräuliche Kunststoff derselben Kunststoffsorte und vorzugsweise demselben Kunststofftyp an. Hierdurch wird die eingangs genannte Aufgabe in besonders zufriedenstellender Weise gelöst. In der Praxis besteht das Vorurteil, dass Kunststoffe derselben Kunststoffart - insbesondere derselben Kunststoffsorte wie z. B. zwei unterschiedliche alipathische Polyamide - problemlos für die erste Schicht und die zweite Schicht verwendet werden können. Als Beispiel mag ein Rohr mit einer ersten Schicht dienen, welche ein PA12-Rezyklat aufweist. Eine zweite Schicht dieses beispielhaften Rohrs aus der Praxis mag einen jungfräulichen PA612-Kunststoff umfassen. Der Gedanke der möglichst identischen Materialien der ersten Schicht und der zweiten Schicht ist der Praxis bisher völlig fremd. Stattdessen geht es darum, wie auch immer geartete Polyamide in Schichtverbünden miteinander zu kombinieren. Dies mag den Hintergrund haben, dass Polyamide mit die am häufigsten verwendeten technischen Kunststoffe sind und zugleich in Mehrschichtrohren sehr oft zum Einsatz kommen. Folglich ist der Einsatz von PA-Rezyklaten in Mehrschichtrohren besonders preisgünstig. Dies allerdings verstellt den Blick darauf, dass dieser Kostenaspekt verschiedenen technischen Erwägungen - insbesondere einer möglichst geringen Anzahl der Schichten, der Stärke der Rohrwand und der Funktionalität - zuwiderläuft. Der Erfindung hingegen liegt insbesondere die Erkenntnis zugrunde, dass die Verwendung von PA12-Rezyklat in der ersten Schicht und einem jungfräulichen PA612-Kunststoff in der zweiten Schicht die eingangs genannte Aufgabe zwar löst, jedoch noch immer mit Nachteilen behaftet ist. Beispielsweise führt diese Kombination - welche eine bisherige, einzige Schicht aus PA612 ersetzt - häufig dazu, dass eine der PA612-Schicht gegenüberliegende und an die PA12-Rezyklatschicht angrenzende Schicht an die PA12-Rezyklatschicht angepasst werden muss.

Ganz besonders wurde gefunden, dass - wenn das erste Kunststoff-Rezyklat und der erste jungfräuliche Kunststoff derselben Kunststoffsorte und vorzugsweise desselben Kunststofftyps angehören - dann eine Anpassung der gegenüberliegenden Schicht zu vernachlässigen ist bzw. vollständig entfällt. Insbesondere bedarf es dann in kaum noch einem Fall einer Haftvermittlerschicht, welche ansonsten in einigen Fällen zwischen der ersten Schicht und einer der zweiten Schicht gegenüberliegenden Schicht angeordnet werden müsste. Gleichzeitig ersetzt die erste Schicht Teile der bisherigen, jungfräulichen Schicht bestmöglich, so dass die Dicke der ersten und zweiten Schicht zusammengenommen und damit auch die Stärke der Rohrwand möglichst gering ausfällt.

Gemäß einer besonders bevorzugten Ausführungsform beträgt der Anteil der Schichtdicke der ersten Schicht - bezogen auf die Gesamtdicke der ersten Schicht und der zweiten Schicht zusammengenommen - höchstens 95 % bzw. 90 % bzw. 85 % bzw. 80 % bzw. 75 % bzw. 70 %. Es ist zweckmäßig, dass sich der Anteil der Schichtdicke der zweiten Schicht - bezogen auf die Gesamtdicke der ersten Schicht und der zweiten Schicht zusammengenommen - auf wenigstens 5 % bzw. 10 % bzw. 15 % bzw. 20 % bzw. 25 % bzw. 30 % beläuft. Vorteilhafterweise beläuft sich der Anteil der Schichtdicke der ersten Schicht - bezogen auf die Gesamtdicke der ersten Schicht und der zweiten Schicht zusammengenommen - auf wenigstens 30 % bzw. 40 % bzw. 50 % bzw. 60 % bzw. 70 %. Es ist bevorzugt, dass sich der Anteil der Schichtdicke der zweiten Schicht - bezogen auf die Gesamtdicke der ersten Schicht und der zweiten Schicht zusammengenommen - auf höchstens 70 % bzw. 60 % bzw. 50 % bzw. 40 % bzw. 30 % beläuft. Es wurde gefunden, dass unter Verwendung einer ersten Schicht umfassend das erste Kunststoff-Rezyklat nicht in Gänze auf die zweite Schicht verzichtet werden kann. Die eingangs genannte Aufgabe wird daher in besonders bevorzugter Weise gelöst durch die genannten Schichtdickenverhältnisse. Dies ist eine überraschende Erkenntnis, weil es beispielsweise ohne Weiteres denkbar gewesen wäre, eine jungfräuliche Schicht gänzlich durch eine etwas dickere Rezyklat-Schicht zu ersetzen. Dem ist allerdings nicht so, so dass insbesondere die genannten, bevorzugten Schichtdicken-verhältnisse besonders vorteilhafte technische Lösungen darstellen.

Mit Vorteil beläuft sich eine Schichtdicke der zweiten Schicht auf höchstens 0,7 mm bzw. 0,6 mm bzw. 0,5 mm 0,4 mm bzw. bzw. 0,35 mm. Es ist bevorzugt, dass die zweite Schicht eine Schichtdicke von wenigstens 0,05 mm bzw. 0,07 mm bzw. 0,09 mm aufweist. Vorzugsweise beträgt eine Schichtdicke der ersten Schicht wenigstens 0,2 mm bzw. 0,3 mm bzw. 0,4 mm. Eine Schichtdicke der ersten Schicht mag sich auf höchstens 1,5 mm bzw. 1,2 mm bzw. 1,0 mm bzw. 0,8 mm bzw. 0,6 mm belaufen.

Gemäß einer bevorzugten Ausführungsform beträgt die Schichtdicke der ersten Schicht wenigstens 10% bzw. 15% bzw. 20% bezogen auf die Gesamtwandstärke des Rohrs. Zweckmäßigerweise beläuft sich die Schichtdicke der ersten Schicht auf höchstens 70 % bzw. 60 % bzw. 50 % bzw. 40 % der Gesamtwandstärke des Rohrs.

Zweckmäßigerweise ist die Molmassenverteilung des ersten Kunststoff-Rezyklats bzw. der ersten Schicht breiter als diejenige des ersten jungfräulichen Kunststoffs bzw. der zweiten Schicht. Es ist - anders ausgedrückt - zweckmäßig, dass die Polydispersität der Molmassenverteilung des ersten Kunststoff-Rezyklats bzw. der ersten Schicht größer ist als diejenige des ersten jungfräulichen Kunststoffs bzw. der zweiten Schicht. Es ist möglich, dass die Molmassenverteilung des ersten Kunststoff-Rezyklats bimodal oder multimodal ist. Es ist daher möglich, dass die Molmassenverteilung des ersten Kunststoff-Rezyklats mehrere Maxima aufweist. In diesem Fall wird der Begriff "Polydispersität" vorzugsweise so verstanden, dass die einzelnen Polydispersitäten der einzelnen Maxima addiert werden, sofern sich die Polydispersitäten der einzelnen Maxima nicht überlappen. Überlappen sich hingegen die der Polydispersitäten der einzelnen Maxima, so werden der unterste und der oberste Grenzwert der sich überlappenden Polydispersitäten voneinander abgezogen, um die resultierende Überlapp-Polydispersität zu bestimmen. Es ist besonders bevorzugt, dass die Polydispersität der Molmassenverteilung des ersten Kunststoff-Rezyklats wenigstens um den Faktor 1,1 bzw. 1,2 bzw. 1,3 bzw. 1,4 bzw. 1,5 bzw. 1,6 größer ist als diejenige des ersten jungfräulichen Kunststoffs.

Mit Vorteil beträgt der Gewichtsanteil des ersten Kunststoff-Rezyklats an der ersten Schicht wenigstens 70 % bzw. 80 % bzw. 90 % bzw. 95 % bzw. 97 % bzw. 99 %. Es ist möglich, dass der Gewichtsanteil des ersten jungfräulichen Kunststoffs an der zweiten Schicht wenigstens 70 % bzw. 80 % bzw. 90 % bzw. 95 % bzw. 97 % bzw. 99 % beträgt. Es ist bevorzugt, dass der restliche Gewichtsanteil der ersten Schicht bzw. der zweiten Schicht wenigstens 50 % bzw. 70 % bzw. 90 % Additive umfasst. Es ist sehr bevorzugt, dass die erste Schicht und/oder die zweite Schicht keinen weiteren Kunststoff umfasst.

Es ist möglich, dass die erste Schicht dunkler gefärbt ist als die zweite Schicht. Dies kann aus der Verwendung recycelter Materialien resultieren, die häufig insgesamt etwas unreiner als die jungfräulichen Materialien sind. Es mag sein, dass die erste Schicht einen Farbton - insbesondere einen Grauton - aufweist, welcher in der dunkleren Hälfte und insbesondere in dem dunkleren Drittel einer zugehörigen Farbtabelle befindlich ist. Mit Vorteil weist die zweite Schicht einen Farbton auf, welcher in der helleren Hälfte bzw. in dem helleren Drittel einer zugehörigen Farbtabelle befindlich ist. Es ist sehr bevorzugt, dass die erste Schicht wenigstens grau, vorzugsweise dunkelgrau und ganz besonders vorzugsweise schwarz gefärbt ist. Mit Vorteil weist die zweite Schicht einen weißen Farbton auf. Gemäß einer Ausführungsform umfasst die erste Schicht ein Pigment, wobei das Pigment einem dunkleren Drittel einer zugehörigen Farbtabelle zugeordnet ist. Es ist möglich, dass die erste Schicht und/oder zweite Schicht weiß, insbesondere cremeweiß oder grauweiß, ist, wobei die erste Schicht zweckmäßigerweise dunkler als die zweite Schicht ist.

Es ist bevorzugt, dass für das erste Kunststoff-Rezyklat industrielle Kunststoff-Rückstände verwendet werden.

Nach einer bevorzugten Ausführungsform gehören das erste Kunststoff-Rezyklat und der erste jungfräuliche Kunststoff den Polyamiden, den Polyolefinen oder derselben Kunststoffart aus der Kunststoffgruppe der thermoplastischen Elastomeren an. Vorzugsweise gehören das erste Kunststoff-Rezyklat und der erste jungfräuliche Kunststoff den aliphatischen Polyamiden an. Es ist möglich, dass das erste Kunststoff-Rezyklat und der erste jungfräuliche Kunststoff der Kunststoffsorte der Polypropylen angehört. Vorzugsweise gehören das erste Kunststoff-Rezyklat und der erste jungfräuliche Kunststoff den thermoplastischen Vulkanisaten an.

Gemäß einer vorteilhaften Ausführungsform weist das Rohr eine zusätzliche Schicht auf, wobei die zusätzliche Schicht einen zweiten jungfräulichen Kunststoff umfasst, wobei der zweite jungfräuliche Kunststoff derselben Kunststoffart vorzugsweise derselben Kunststoffsorte und besonders vorzugsweise demselben Kunststofftyp wie das erste Kunststoff-Rezyklat angehört. Es ist sehr bevorzugt, dass die erste Schicht zwischen der zweiten Schicht und der zusätzlichen Schicht angeordnet ist. Besonders vorzugsweise liegt die erste Schicht an der zusätzlichen Schicht an. Es ist von Vorteil, dass die zusätzliche Schicht bzw. der zweite jungfräuliche Kunststoff wenigstens ein Merkmal, vorzugsweise mehrere Merkmale und ganz besonders vorzugsweise alle der vorstehend genannten Merkmale mit der zweiten Schicht bzw. dem ersten jungfräulichen Kunststoff gemein hat. Dieser Anordnung liegt die Erkenntnis zugrunde, dass unter Inkaufnahme von drei Schichten das Optimum an Funktionalität erreicht wird, wobei gleichzeitig ein nennenswerter Teil dieser Dreischicht-Struktur aus wiederverwendetem Kunststoff besteht. Insbesondere ist es ein Vorteil der dreischichtigen Anordnung mit einem zweiten jungfräulichen Kunststoff, dass die erste Schicht mit dem ersten Kunststoff-Rezyklat von den beiden Schichten mit den jungfräulichen Kunststoffen geschützt wird. So mag beispielsweise die erste Schicht für ausreichend mechanische Stabilität sorgen, während die zweite Schicht und die zusätzliche Schicht die erste Schicht chemisch schützen.

Es ist möglich, dass das Rohr eine weitere Schicht umfasst, wobei die weitere Schicht ein zweites Kunststoff-Rezyklat aufweist. Das Rohr kann eine zweite jungfräuliche Schicht umfassen, wobei die zweite jungfräuliche Schicht mit Vorteil an der weiteren Schicht anliegt. Zweckmäßigerweise umfasst die zweite jungfräuliche Schicht einen weiteren jungfräulichen Kunststoff. Es ist besonders von Vorteil, dass der weitere jungfräuliche Kunststoff derselben Kunststoffart, vorzugsweise derselben Kunststoffsorte und besonders vorzugsweise demselben Kunststofftyp wie das zweite Kunststoff-Rezyklat angehört. Die Kunststoffart des ersten Kunststoff-Rezyklats und des ersten jungfräulichen Kunststoffs ist vorzugsweise ausgewählt aus einer Menge von Kunststoffarten umfassend Polyamide, Polyolefine, Polyurethane, Polymere mit Vinylalkohol, Fluorpolymere, thermoplastische Vulkanisate, thermoplastische Elastomere auf Urethanbasis, thermoplastische Elastomere auf Olefinbasis. Das zweite Kunststoff-Rezyklat mag eines, mehrere oder alle der vorgenannten Merkmale des ersten Kunststoff-Rezyklats aufweisen. Der weitere jungfräuliche Kunststoff bzw. die zweite jungfräuliche Schicht mag eines, mehrere oder alle der vorgenannten Merkmale des ersten jungfräulichen Kunststoffs bzw. der zweiten Schicht aufweisen. Es ist möglich, dass das Rohr noch weitere Schichten umfasst. Diese weiteren Schichten können beispielsweise ein Polyamid, ein Polyolefin oder eine andere der oben genannten Kunststoffarten aufweisen.

Gemäß einer Ausführungsform liegt an der ersten Schicht eine Haftvermittlerschicht an. Die Haftvermittlerschicht mag insbesondere ein Polyolefin aufweisen. Es ist möglich, dass die Haftvermittlerschicht ein Blend aus der ersten Schicht mit einem weiteren Kunststoff ist, wobei der weitere Kunststoff ein Bestandteil der mit der Haftvermittlerschicht zu verbindenden Schicht ist. Es ist möglich, dass die Haftvermittlerschicht ein die Haftvermittlung verbesserndes Additiv umfasst. Das die Haftvermittlung verbessernde Additiv kann beispielsweise ein Maleinsäureanhydrid, ein Dimethylmaleat oder Acrylsäure sein.

Das Rohr wird vorzugsweise in einem Landfahrzeug und besonders vorzugsweise in einem Straßenfahrzeug verwendet. Mit Vorteil handelt es sich bei dem Straßenfahrzeug um ein Elektrofahrzeug. Es ist bevorzugt, dass das Rohr als Kühlrohrmittel verwendet wird. Das vorzugsweise als Kühlrohrmittel eingesetzte Rohr dient mit besonderem Vorteil der Kühlung innerhalb eines Elektrofahrzeugs und besonders vorzugsweise der Kühlung einer Batterie des Elektrofahrzeugs. Es ist möglich, dass das Rohr zum Transport von Kraftstoffen und/oder Bremsflüssigkeiten und/oder Wasserstoff und/oder wässrigen Harnstofflösungen und/oder Kältemittel für Klimaanlagen verwendet wird.

Die Erfindung wird nachfolgend anhand von vier Ausführungsbeispielen in vier schematisch gestalteten Figuren näher erläutert. Es zeigen
- Fig. 1: ein erstes Ausführungsbeispiel im Querschnitt mit fünf Schichten,
- Fig. 2: ein zweites Ausführungsbeispiel im Querschnitt mit sechs Schichten,
- Fig. 3: ein drittes Ausführungsbeispiel im Querschnitt mit fünf Schichten und
- Fig. 4: ein viertes Ausführungsbeispiel im Querschnitt mit sechs Schichten.

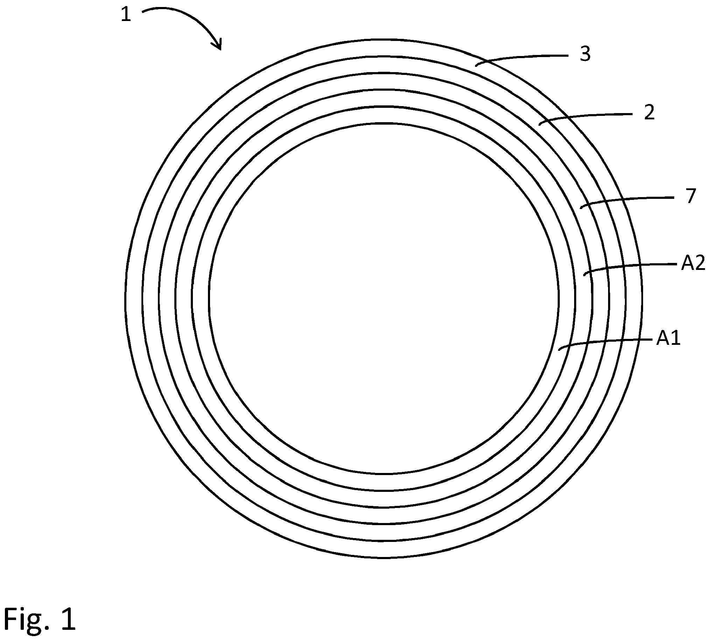

In Fig. 1 ist ein erstes Ausführungsbeispiel der Erfindung in Form eines Rohrs 1 gezeigt, welches im Querschnitt dargestellt ist. Das Rohr 1 dieses Ausführungsbeispiels umfasst insgesamt fünf Schichten. Eine erste Schicht 2 umfasst ein erstes Kunststoff-Rezyklat, wobei das erste Kunststoff-Rezyklat dieses Ausführungsbeispiels aus PA12 besteht. Die erste Schicht 2 ist von einer zweiten Schicht 3 umgeben sein, welche einen ersten jungfräulichen Kunststoff umfasst. Der erste jungfräuliche Kunststoff der zweiten Schicht 3 dieses Ausführungsbeispiels besteht aus PA12. Die erste Schicht 2 dieses Ausführungsbeispiels umschließt eine Haftvermittlerschicht 7 zur optimierten Haftung an einer Schicht A2. Die Schicht A2 kann beispielsweise ein Polypropylen aufweisen. Die Schicht A2 mag ihrerseits eine innerste Schicht A1 umschließen. Die innerste Schicht A1 kann beispielsweise ein thermoplastisches Elastomer umfassen.

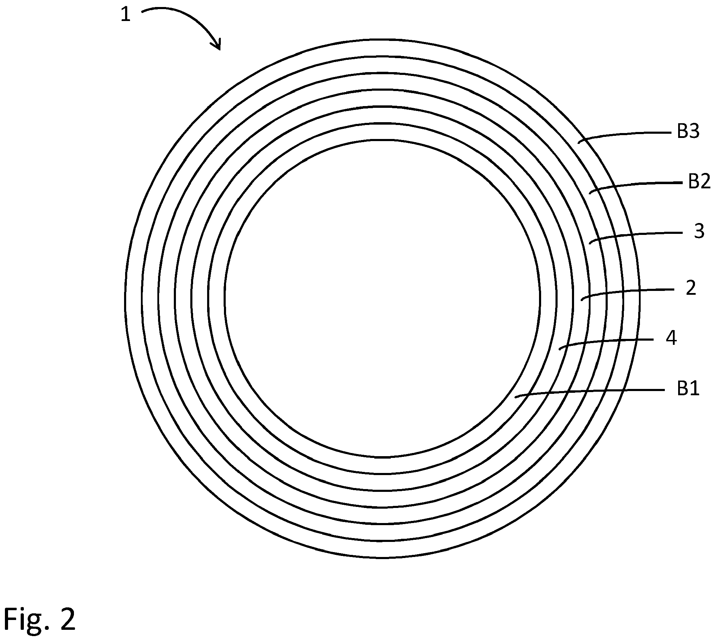

Das Rohr 1 des zweiten Ausführungsbeispiels gemäß Fig. 2 umfasst eine erste Schicht 2, welche ein erstes Kunststoff-Rezyklat aufweist. Das erste Kunststoff-Rezyklat dieses Ausführungsbeispiels besteht vorzugsweise aus einem Polypropylen und besonders vorzugsweise aus einem isotaktischen Polypropylen. Das Rohr 1 des zweiten Ausführungsbeispiels umfasst eine zweite Schicht 3, welche einen ersten jungfräulichen Kunststoff aufweist. Der erste jungfräuliche Kunststoff dieses Ausführungsbeispiels besteht vorzugsweise aus einem Polypropylen und besonders vorzugsweise aus einem isotaktischen Polypropylen. In diesem Ausführungsbeispiel ist die zweite Schicht 3 um die erste Schicht 2 herum angeordnet. Die erste Schicht 2 umschließt ihrerseits eine zusätzliche Schicht 4. Die zusätzliche Schicht 4 umfasst einen zweiten jungfräulichen Kunststoff, wobei der zweite jungfräuliche Kunststoff dieses Ausführungsbeispiels aus einem Polypropylen, insbesondere aus einem isotaktischen Polypropylen, besteht. Die zusätzliche Schicht 4 schließlich mag eine innerste Schicht B1 umschließen, welche vorzugsweise ein thermoplastisches Elastomer aufweist. Es ist möglich, dass die zweite Schicht 3 von einer Schicht B2 umschlossen wird. Die Schicht B2 dieses Ausführungsbeispiels mag einen Haftvermittler umfassen. In diesem Ausführungsbeispiel umschließt eine äußerste Schicht B3 die Schicht B2. Die Schicht B3 kann ein Polyamid, insbesondere PA11 oder PA12, aufweisen.

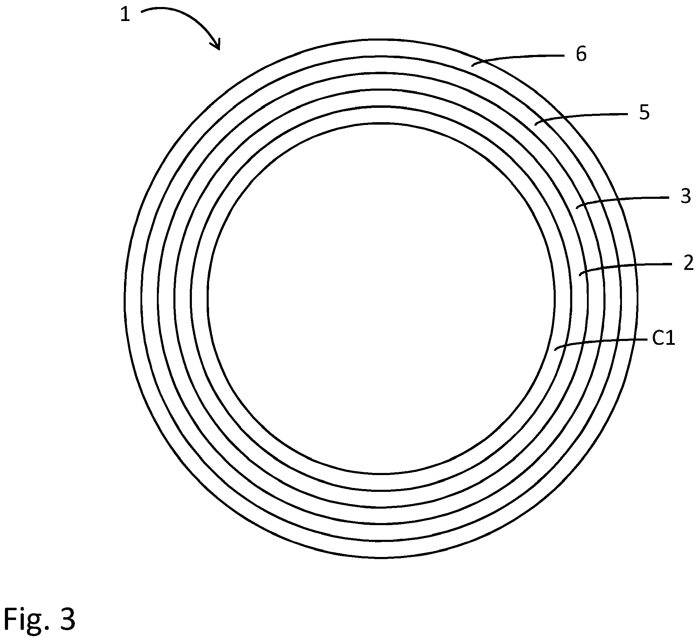

Das in Fig. 3 abgebildete dritte Ausführungsbeispiel eines Rohrs 1 umfasst insgesamt fünf Schichten. Eine erste Schicht 2 weist ein erstes Kunststoff-Rezyklat auf, welches vorzugsweise aus einem Polypropylen, insbesondere isotaktischen Polypropylen, besteht. Eine zweite Schicht 3 umschließt in diesem Ausgangsbeispiel die erste Schicht 2 und umfasst einen ersten jungfräulichen Kunststoff. Der erste jungfräuliche Kunststoff dieses Ausführungsbeispiels mag aus einem Polypropylen, insbesondere einem isotaktischen Polypropylen, bestehen. Es ist möglich, dass die zweite Schicht 3 von einer weiteren Schicht 5 umschlossen wird. Die weitere Schicht 5 umfasst vorzugsweise ein zweites Kunststoff-Rezyklat, welches in diesem Ausführungsbeispiel aus einem thermoplastischen Vulkanisat, vorzugsweise einem TPV auf EPDM/PP-Basis besteht. Es ist bevorzugt, dass die weitere Schicht 5 von einer zweiten jungfräulichen Schicht 6 umschlossen wird. Vorteilhafterweise umfasst die zweite jungfräuliche Schicht 6 einen weiteren jungfräulichen Kunststoff, welcher bevorzugtermaßen aus einem thermoplastischen Vulkanisat, vorzugsweise einem TPV auf EPDM/PP-Basis besteht. In diesem dritten Ausführungsbeispiel bildet die zweite jungfräuliche Schicht 6 die äußerste Schicht des Rohrs 1. Es ist möglich, dass die erste Schicht 2 eine innerste Schicht C1 umschließt. Die innerste Schicht C1 mag beispielsweise ein thermoplastisches Vulkanisat aufweisen.

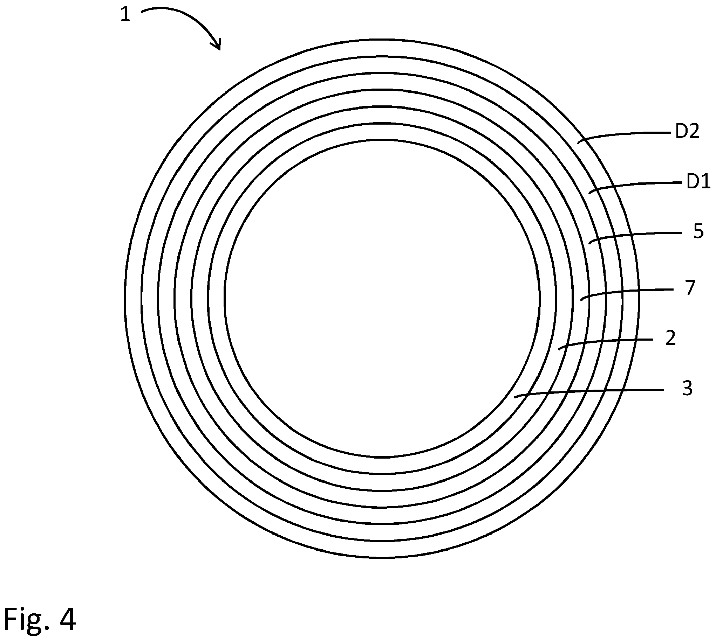

Das in Fig. 4 abgebildete vierte Ausführungsbeispiel der Erfindung zeigt ein Rohr 1 im Querschnitt, welches insgesamt sechs Schichten aufweist. Eine erste Schicht 2 umfasst ein erstes Kunststoff-Rezyklat, welches in diesem Ausführungsbeispiel ein thermoplastisches Elastomer umfasst. Bei dem thermoplastischen Elastomer der ersten Schicht 2 kann es sich beispielsweise um EPDM handeln. Die erste Schicht 2 umschließt in diesem Ausführungsbeispiel eine zweite Schicht 3, welche zugleich auch die innerste Schicht sein kann. Die zweite Schicht 3 kann einen ersten jungfräulichen Kunststoff umfasst, wobei der erste jungfräuliche Kunststoff vorzugsweise ein thermoplastisches Elastomer und insbesondere ein EPDM ist. Die erste Schicht 2 wird in diesem Ausführungsbeispiel von einer Haftvermittlerschicht 7 umschlossen, welche ihrerseits von einer weiteren Schicht 5 umgeben ist. Die weitere Schicht 5 umfasst vorzugsweise ein zweites Kunststoff-Rezyklat. Das zweite Kunststoff-Rezyklat besteht vorzugsweise aus einem thermoplastischen Vulkanisat. Mit Vorteil wird die weitere Schicht 5 von einer zweiten jungfräulichen Schicht 6 umschlossen, wobei die zweite jungfräuliche Schicht 6 einen weiteren jungfräulichen Kunststoff aufweisen kann. Der weitere jungfräuliche Kunststoff besteht vorzugsweise aus einem thermoplastischen Vulkanisat.

Die vorstehend aufgeführten Ausführungsbeispiele werden vorzugsweise für die Verwendung in Kraftfahrzeugen eingesetzt. Mit besonderem Vorteil werden die Rohre 1 der vier genannten Ausführungsbeispiele für den Transport einer Kühlflüssigkeit in einem Kraftfahrzeug verwendet, so dass es sich zweckmäßigerweise um Kühlrohre handelt. Es ist sehr bevorzugt, dass die Kühlrohre der Kühlung von Batterien von Elektrofahrzeugen dienen. Das in den Kühlrohren transportierte Kühlmedium mag beispielsweise eine Wasser-Glykol-Flüssigkeit sein.

## Patentansprüche

1. Verwendung eines ersten Kunststoff-Rezyklats für ein Rohr(1) eines Landfahrzeugs, insbesondere eines Straßenfahrzeugs, wobei das Rohr (1) eine erste Schicht (2) und eine zweite Schicht (3) umfasst, wobei die erste Schicht (2) und die zweite Schicht (3) aneinander anliegen, wobei die erste Schicht (2) das erste Kunststoff-Rezyklat aufweist, wobei die zweite Schicht (3) einen ersten jungfräulichen Kunststoff umfasst, wobei das erste Kunststoff-Rezyklat und der erste jungfräuliche Kunststoff derselben Kunststoffart - beispielsweise der Kunststoffart der Polyamide oder der Kunststoffart der Polyolefine - angehören.

2. Verwendung nach Anspruch 1, wobei das erste Kunststoff-Rezyklat und der erste jungfräuliche Kunststoff derselben Kunststoffsorte angehören.

3. Verwendung nach einem der Ansprüche 1 oder 2, wobei der Anteil der Schichtdicke der ersten Schicht (2) - bezogen auf die Gesamtdicke der ersten Schicht (2) und der zweiten Schicht (3) zusammengenommen - höchstens 90 % bzw. 80 % bzw. 75 % beträgt.

4. Verwendung nach einem der Ansprüche 1 bis 3, wobei die zweite Schicht (3) eine Schichtdicke von höchstens 0,5 mm bzw. 0,4 mm bzw. 0,35 mm aufweist.

5. Verwendung nach einem der Ansprüche 1 bis 4, wobei die Schichtdicke der ersten Schicht (2) wenigstens 10 % bzw. 15 % bzw. 20 % - bezogen auf die Gesamtwandstärke des Rohrs (1) - beträgt.

6. Verwendung nach einem der Ansprüche 1 bis 5, wobei die Molmassenverteilung des ersten Kunststoff-Rezyklats bzw. der ersten Schicht (2) breiter ist als diejenige des ersten jungfräulichen Kunststoffs bzw. der zweiten Schicht (3).

7. Verwendung nach einem der Ansprüche 1 bis 6, wobei der Gewichtsanteil des ersten Kunststoff-Rezyklats an der ersten Schicht (2) wenigstens 70% bzw. 90% bzw. 95% beträgt.

8. Verwendung nach einem der Ansprüche 1 bis 7, wobei der Gewichtsanteil des ersten jungfräulichen Kunststoffs an der zweiten Schicht (3) wenigstens 70% bzw. 90% bzw. 95% beträgt.

9. Verwendung nach einem der Ansprüche 1 bis 8, wobei die erste Schicht (2) dunkler gefärbt ist als die zweite Schicht (3), wobei die erste Schicht (2) vorzugsweise einen Farbton - insbesondere Grauton - aufweist, welcher in der dunkleren Hälfte - insbesondere in dem dunkleren Drittel - einer zugehörigen Farbtabelle befindlich ist.

10. Verwendung nach einem der Ansprüche 1 bis 9, wobei für das erste Kunststoff-Rezyklat industrielle Kunststoff-Rückstände verwendet werden.

11. Verwendung nach einem der Ansprüche 1 bis 10, wobei das erste Kunststoff-Rezyklat und der erste jungfräuliche Kunststoff den Polyamiden, den Polyolefinen oder den thermoplastischen Elastomeren angehören.

12. Verwendung nach einem der Ansprüche 1 bis 11, wobei das Rohr (1) eine zusätzliche Schicht (4) aufweist, wobei die zusätzliche Schicht (4) einen zweiten jungfräulichen Kunststoff umfasst, wobei der zweite jungfräuliche Kunststoff derselben Kunststoffart wie das erste Kunststoff-Rezyklat angehört.

13. Verwendung nach einem der Ansprüche 1 bis 12, wobei das Rohr (1) eine weitere Schicht (5) umfasst, wobei die weitere Schicht (5) ein zweites Kunststoff-Rezyklat aufweist.

14. Verwendung nach einem der Ansprüche 1 bis 13, wobei das Rohr (1) eine zweite jungfräuliche Schicht (6) umfasst, wobei die zweite jungfräuliche Schicht (6) einen weiteren jungfräulichen Kunststoff aufweist.

15. Verwendung nach einem der Ansprüche 1 bis 14, wobei das Straßenfahrzeug vorzugsweise ein Elektrofahrzeug ist, wobei bevorzugt ist, dass das Rohr(1) als Kühlrohrmittel, insbesondere für eine Batterie des Elektrofahrzeugs, verwendet wird.
